# EUROPÄISCHE PATENTANMELDUNG

(11) **EP 4 818 016 A1**
(43) Veröffentlichungstag der Anmeldung: **07.10.2026**
(21) Anmeldenummer: 25168227.4
(22) Anmeldetag: 03.04.2025
(51) Int. Cl.: B62J 11/10, B62J 15/00, B62J 15/02

(54) **FAHRZEUGKOMPONENTE, RADSCHUTZVORRICHTUNG, FAHRZEUG**

(71) Anmelder: SKS metaplast Scheffer-Klute GmbH, 59846 Sundern (DE)
(72) Erfinder: Kordes, Sven, 59846 Sundern (DE)
(74) Vertreter: Fritz Patent- und Rechtsanwälte PartmbB

(57) **Zusammenfassung**

Fahrzeugkomponente wenigstens für ein Fahrzeug, wie ein Zweirad, mit wenigstens einer Befestigungseinrichtung (5) wenigstens zur Anbringung wenigstens eines Teils (3), wie eines Kabels (3) oder einer Strebe (3), an wenigstens einem Anbauteil (1) des Zweirads umfassend wenigstens eine Klammer (2); und wenigstens eine Klammerhalterung (6); und wobei die wenigstens eine Klammer (2) dazu eingerichtet ist lösbar mit der wenigstens einen Klammerhalterung (6) verbunden zu werden; und wobei die Klammer (2) wenigstens eine Aufnahme (9) aufweist, welche die Klammerhalterung (6) im aufgenommenen Zustand wenigstens teilweise umschließt; und wenigstens eine Sicherungseinheit (7) zur Herstellung einer formschlüssigen Verbindung zwischen der Klammer (2) und der Klammerhalterung (6).

## Beschreibung

Die vorliegende Erfindung betrifft eine Fahrzeugkomponente für ein Fahrzeug, wie ein Zweirad, eine Radschutzvorrichtung für ein Fahrzeug und ein Fahrzeug.

Bei Fahrzeugkomponenten, wie Radschützern, für Fahrzeuge, wie Fahrrädern, kann es erforderlich sein, dass beispielsweise Teile, Kabel für eine Beleuchtung oder eine Beleuchtung daran befestigt wird oder dass die Fahrzeugkomponente durch eine Strebe abgestützt wird. Eine Befestigung muss robust und auch wieder lösbar sein, zum Beispiel für Reparaturen oder Umbauten durchzuführen.

Aus der DE 10 2021 126 788 A1 ist eine Radschutzvorrichtung für ein Zweirad bekannt geworden, welche einen Radschützer mit einer Kabelaufnahme und zwei Klammerhalterungen an gegenüberliegenden Seiten der Kabelaufnahme und separate Klammern mit zwei Aufnahmen umfasst. Zur Fixierung eines Kabels wird dieses in die Kabelaufnahme gelegt und mit der Klammer gesichert. Die Aufnahmen der Klammer umfassen hierzu jeweils eine der Kabelaufnahmen. Die Aufnahmen weisen Reibflächen auf, welche auf die Kabelaufnahmen gesteckt werden, sodass diese festklemmen. Tests haben gezeigt, dass die Klammern sehr enge Fertigungstoleranzen erfüllen müssen, damit die Klammer im Betrieb sicher an dem Radschützer hält und nicht abfällt. Dementsprechend sind besonders enge Fertigungstoleranzen an beiden Bauteilen erforderlich, welche zu sehr hohen Fertigungskosten führen.

Es ist deshalb die Aufgabe der vorliegenden Erfindung eine Fahrzeugkomponente zur Verfügung zu stellen, welche eine sicherere Befestigung ermöglicht und kostengünstig fertigbar ist. Insbesondere ist es die Aufgabe der vorliegenden Erfindung eine verbesserte Kabelaufnahme zur Verfügung zu stellen.

Die Aufgabe wird durch eine Fahrzeugkomponente mit den Merkmalen nach Anspruch 1, durch eine Radschutzvorrichtung mit den Merkmalen nach Anspruch 13 und ein Fahrzeug mit den Merkmalen nach Anspruch 14 gelöst. Vorteilhafte Weiterbildungen sind Gegenstand der Unteransprüche. Weitere Merkmale und Vorteile sind Gegenstand der allgemeinen Beschreibung und der Beschreibung der Ausführungsbeispiele.

Die erfindungsgemäße Fahrzeugkomponente wenigstens für ein Fahrzeug, wie ein Zweirad, insbesondere ein Fahrrad, umfasst wenigstens eine Befestigungseinrichtung wenigstens zur Anbringung wenigstens eines Teils, wie eines Kabels, einer Leuchte oder einer Strebe, an wenigstens einem Anbauteil des Fahrzeugs. Die Befestigungseinrichtung umfasst:
- wenigstens eine Klammer; und
- wenigstens eine Klammerhalterung; und wobei
- die wenigstens eine Klammer dazu eingerichtet ist lösbar mit der wenigstens einen Klammerhalterung verbunden zu werden, und wobei die Klammer wenigstens eine Aufnahme aufweist, welche die Klammerhalterung im aufgenommenen Zustand wenigstens teilweise umschließt; und
- wenigstens eine Sicherungseinheit zur Herstellung einer formschlüssigen Verbindung zwischen der Klammer und der Klammerhalterung. Insbesondere ist wenigstens ein seitlicher Führungsarm vorhanden.

Die Erfindung hat viele Vorteile. Ein erheblicher Vorteil ist, dass eine formschlüssige Verbindung zwischen der Klammer und der Klammerhalterung eine dauerhaft sichere Befestigung der Klammer an der Klammerhalterung ermöglicht. Dadurch kann eine dauerhaft sichere und robuste formschlüssige Verbindung auch mit üblichen Fertigungstoleranzen hergestellt werden. Dadurch ist eine kostengünstige Herstellung möglich. Weiter kann die formschlüssige Verbindung auch wieder gelöst werden, um zum Beispiel Reparaturarbeiten oder Umbauten durchzuführen.

Besonders bevorzugt umfasst die Sicherungseinheit wenigstens ein hintergreifbares Rückhalteelement, welches insbesondere an einem äußeren distalen Ende der, vorzugsweise stegförmigen, Klammerhaltung als Verdickung ausgebildet ist. Vorteilhaft kann die Klammer auf die Klammerhaltung mit dem Rückhalteelement aufgesteckt werden, wobei durch die Verdickung ein Formschluss ermöglicht wird.

Vorzugsweise weist die Sicherungseinheit wenigstens ein Rastelement auf, welches insbesondere an der Klammer ausgebildet ist. Insbesondere hintergreift das Rastelement das Rückhalteelement im verbundenen Zustand, sodass eine formschlüssige Verbindung vorliegt. Insbesondere ist das Rastelement elastisch formbar ausgebildet, sodass es sich beim Aufstecken der Klammer um das Rückhalteelement verformt und dann einrastet, indem sich das Rastelement insbesondere zurückformt, vorzugsweise in die Form im nicht aufgenommenen Zustand. Vorteilhaft ist das Rastelement spitzwinklig ausgebildet und verformt sich beim Aufstecken der Klammer um die Klammerhalterung herum. Vorteilhaft ist das Rückhalteelement im verbundenen Zustand, insbesondere im Wesentlichen, nicht mehr verformt. Vorteilhaft liegt hierdurch eine, bevorzugt, nahezu spannungsfreie Verbindung zwischen der Klammer und der Klammerhalterung vor. Vorteilhaft bietet eine solche Verbindung einen sicheren Halt und kann auch mit den üblichen Fertigungstoleranzen hergestellt werden.

Durch die spannungsfreie Verbindung zwischen der Klammer und der Klammerhalterung wird ein sicherer Halt auch bei Verformungen der Klammerhalterung, und insbesondere eines Radschützers mit einer Klammerhalterung, durch Erschütterungen oder dergleichen ermöglicht.

Vorteilhaft erstreckt sich die Aufnahme, insbesondere im Wesentlichen, über eine gesamte Länge der Klammer. Vorteilhaft wird hierdurch ein besonders sicherer Halt der Klammer an der Klammerhalterung ermöglicht.

Vorzugsweise ist die Klammerhalterung im Wesentlichen stegförmig ausgebildet. Insbesondere ist die Aufnahme U-förmig ausgebildet, sodass die Aufnahme die, insbesondere je Aufnahme genau eine, Klammerhalterung im verbundenen Zustand im Wesentlichen umschließt und/oder umgreift. Insbesondere ist wenigstens ein Rastelement, insbesondere zwei Rastelemente, an der Aufnahme ausgebildet, vorzugsweise an einem Ende der Aufnahme. Vorteilhaft ermöglicht die Aufnahme wenigstens eine Führung der Klammer gegenüber der Klammerhalterung beim Aufstecken und/oder beim Herstellen der Verbindung. Vorteilhaft sind zwei Rastelemente vorhanden und gegenüberliegend zueinander an der Aufnahme angeordnet. Bevorzugt rasten die Rastelemente beim Herstellen der Verbindung ein. Insbesondere entspricht ein Abstand zwischen den Rastelementen im Wesentlichen einer Breite der, insbesondere stegförmigen, Klammerhalterung, vorzugsweise in einem Bereich der Klammerhalterung, wo keine Verdickung vorhanden ist. Insbesondere ist der Abstand kleiner als ein Durchmesser der Verdickung des Rückhalteelements. Vorteilhaft ist die Klammerhalterung im aufgenommenen Zustand der Klammer nicht verformt. Vorteilhaft ist die Verbindung dadurch besonders sicher und im Wesentlichen unabhängig von Erschütterungen und/oder Verformungen der Klammerhalterung, insbesondere eines Radschützers mit Klammerhalterung. Vorteilhaft wird hierdurch ein Halt der Klammer an gegenüberliegenden Seiten der Klammerhaltung ermöglicht.

Vorzugsweise umfasst die Befestigungseinrichtung wenigstens zwei Klammerhalterungen. Bevorzugt erstrecken sich die Klammerhalterungen parallel zueinander. Insbesondere ist die Klammer an beiden Klammerhalterungen gleichzeitig aufnehmbar. Vorzugsweise kann hierdurch ein besonders sicherer Halt ermöglicht werden. Die parallel zueinander angeordneten Klammerhaltungen ermöglichen vorteilhaft auch eine Verschiebung der Klammern entlang der Klammerhalterungen.

Insbesondere weist die Klammer wenigstens einen flexibel formbaren Bereich auf. Vorteilhaft wird hierdurch eine Kompensation von Fertigungstoleranzen und insbesondere der Klammer zur Klammerhaltung ermöglicht, welche sich negativ bei einer Fügung und insbesondere auf den Halt der Klammer an der Klammerhalterung auswirken können. Vorzugsweise ist der flexibel formbare Bereich wenigstens dauerhaft wenigstens im verbundenen Zustand formbar. Insbesondere kann sich der formbare Bereich auch wieder rückformen in seine ursprüngliche oder in eine andere Form. Dabei ist der formbare Bereich so gestaltet, dass das Material nicht ermüdet.

Vorteilhaft formt sich der flexible Bereich der Klammer bereits bei geringer Krafteinwirkung, sodass ein optimaler Halt der Klammer gegeben ist. Bevorzugt ist der flexible Bereich derart flexibel formbar ausgebildet, dass die eine aus einer Verformung resultierende Rückstellkraft des flexibel formbaren Bereichs erheblich kleiner ist als eine Haltekraft der lösbaren Verbindung der Sicherungseinheit. Besonders bevorzugt ist die Rückstellkraft kleiner als eine elastische und strukturelle Rückstellkraft der Sicherungseinheit, und insbesondere der Klammerhalterungen, sodass sich der flexibel formbare Bereich der Herstellung der Verbindung so formt, ohne dass sich andere Teile der Klammer oder der Klammerhalterungen verformen oder verbiegen. Es kann dadurch ein optimaler Halt der Klammer an der Klammerhaltung garantiert werden kann. Vorteilhaft können durch den flexibel formbaren Bereich Fertigungstoleranzen kompensiert werden und diese Aufgabe muss nicht durch die Sicherungseinheit mit übernommen werden.

Besonders bevorzugt ist der flexibel formbare Bereich im verbundenen Zustand zwischen den Klammerhalterungen angeordnet. Vorzugsweise ist der flexible Bereich zwischen den Sicherungseinheiten und insbesondere zwischen den Aufnahmen bei einer Klammer mit zwei Aufnahmen angeordnet. Vorteilhaft kann dadurch eine optimale Funktion der Befestigungseinrichtung, und insbesondere der Sicherungseinheit, gewährleistet werden.

Vorzugsweise wird der flexibel formbare Bereich durch wenigstens einen Verbindungssteg, insbesondere zwischen den Aufnahmen der Klammer, gebildet. Vorteilhaft ermöglicht ein dünner Verbindungssteg eine dauerhaft flexible Verformung, insbesondere in Form einer Brückenkonstruktion zwischen zwei Aufnahmen mit Sicherungseinheiten.

Insbesondere umfasst der flexibel formbare Bereich eine Mehrzahl an Verbindungsstegen, welche wenigstens eine Öffnung bilden. Durch die Verbindungsstege kann vorteilhaft ein Teil, wie ein Kabel fixiert werden, insbesondere innerhalb einer Kabelaufnahme.

Vorteilhaft ist die Öffnung als Langloch ausgebildet, welches sich im montierten Zustand parallel zu den Klammerhalterungen erstreckt. Vorteilhaft weist das Langloch eine Länge auf, welche wenigstens doppelt so groß ist, wie eine Breite des Langlochs. Bevorzugt beträgt eine Länge des Langlochs mehr als 50 % oder 70 % oder 90 % einer Länge der Klammer. Vorteilhaft führt das Langloch in Verbindung mit den Stegen zu einem besonders geringen Widerstand gegen Verformung, sodass die an den flexiblen formbaren Bereich angeschlossenen Bereiche, insbesondere die Aufnahmen, im Wesentlichen frei zueinander positionierbar sind, um Fertigungstoleranzen auszugleichen und eine optimale Positionierung der Rückhalteelemente zu den Rastelementen zu ermöglichen. Außerdem können verschiedene Radschutz-Zollgrößen mit einer Klammer bedient werden.

In wenigstens einer vorteilhaften Ausgestaltung weist die Befestigungseinrichtung wenigstens ein Anbringungselement, wie ein Hakenelement und/oder eine Öffnung, zum Anbringen einer Stützstrebe oder dergleichen auf. Vorteilhaft kann auch das Anbringungselement formschlüssig an der Klammer aufgenommen werden. Vorteilhaft kann dadurch eine Abstützung eines Anbauteils erfolgen.

Insbesondere weist die Klammer wenigstens einen seitlichen Führungsarm auf. Vorteilhaft erstreckt sich der seitliche Führungsarm quer zur Aufnahme, insbesondere zu der U-förmigen Aufnahme, und/oder quer zu einer, insbesondere stegförmigen, Klammerhalterung. Vorteilhaft erstreckt sich der seitliche Führungsarm bei einer Klammer mit mehreren Aufnahmen seitlich nach außen weg, insbesondere quer zu einem Verlauf der, insbesondere stegförmigen, Klammerhalterungen. In einer vorteilhaften Ausgestaltung sind zwei seitliche Führungsarme, insbesondere an gegenüberliegenden Seiten vorhanden. Insbesondere ist der Führungsarm gekrümmt ausgebildet, um eine definierte Kabelaufnahme mit einem Radschützer, insbesondere einer Basis des Radschützers, zu bilden. Vorteilhaft können durch zwei oder mehr seitliche Führungsarme getrennte Kabelaufnahmen gebildet werden. Vorteilhaft ermöglicht ein seitlicher Führungsarm eine verbesserte Kabelaufnahme. Vorteilhaft kann durch den seitlichen Führungsarm eine verbesserte Kabelaufnahme ermöglicht.

Bevorzugt ist die Klammerhalterung wenigstens im Wesentlichen unstrukturiert oder weist eine im Wesentlichen glatte Oberfläche auf.

Insbesondere ist die Klammerhalterung an wenigstens einem Anbauteil ausgebildet und/oder wenigstens aufgenommen. Vorteilhaft wird hierdurch eine direkte Ableitung von Haltekräften ermöglicht. Weiter ist die wenigstens eine Klammerhalterung besonders kostengünstig zusammen mit dem Anbauteil fertigbar.

Vorzugsweise ist das Anbauteil als Radschützer für ein Fahrzeug mit wenigstens einem Rad, wie ein Zweirad, ausgebildet.

Bevorzugt weist das Anbauteil wenigstens eine Basis auf. Vorzugsweise ist wenigstens eine Klammerhalterung an der Basis des Anbauteils ausgebildet.

Insbesondere ist die Basis langgestreckt und erstreckt sich entlang einer Längsrichtung. Die Basis des Radschützers ist insbesondere in ihrer Längsrichtung zumindest abschnittsweise teiltorusförmig ausgebildet. Vorzugsweise erstreckt sich der Radschützer entlang einer Umfangsrichtung eines Rads im verbundenen Zustand.

Bevorzugt ist wenigstens eine Klammerhalterung in Längsrichtung der Basis auf einer einem Rad zugewandten Seite des Radschützers angeordnet. Vorteilhaft ist die Befestigungseinrichtung damit vor Umwelteinflüssen geschützt. Darüber hinaus ist die Befestigungseinrichtung nicht sichtbar.

Vorzugsweise erstreckt sich die Klammerhalterung in Längsrichtung der Basis des Radschützers. Insbesondere erstreckt sich die Klammerhalterung über mehr als die Hälfte der Länge der Basis, vorzugsweise über mehr als drei Viertel der Länge der Basis, beispielsweise über die gesamte Länge der Basis des Radschützers.

Insbesondere erstreckt sich die Klammerhalterung quer von der Basis, insbesondere in einem am Zweirad angebrachten Zustand in Richtung des Rads. Insbesondere erstreckt sich die Klammerhalterung wenigstens teilweise in Richtung des Rads im bestimmungsgemäßen Gebrauch des Radschützers, vorzugsweise im montierten Zustand.

Besonders bevorzugt bildet wenigstens die Basis mit der wenigstens einen Klammerhalterung, und insbesondere mit der Klammer, eine Kabelaufnahme zur Aufnahme eines Kabels. Vorteilhaft kann ein Teil, wie ein Kabel in der Kabelaufnahme geschützt verlegt und durch sich Klammer sicher angebracht werden. Insbesondere wird die Kabelaufnahme durch einen Verbindungssteg der Klammer, welcher insbesondere als flexibel formbarer Bereich ausgebildet ist, oder durch einen seitlichen Führungsarm der Klammer gebildet. Vorteilhaft erstreckt sich ein distales Ende des seitlichen Führungsarms bis zur Basis des Radschützers, sodass der seitliche Führungsarm mit der Basis, der Klammer und der wenigstens einen Klammerhalterung eine Kabelaufnahme bildet. Insbesondere ist der seitliche Führungsarm gebogen und/oder gekrümmt ausgebildet und erstreckt sich in einem Bogen von der Klammerhalterung nach außen weg. Insbesondere können zwei oder mehr Kabelaufnahmen umfasst sein, welche durch wenigstens einen seitlichen Führungsarm und/oder den Verbindungssteg gebildet werden. Vorteilhaft ermöglicht eine durch einen seitlichen Führungsarm gebildete Kabelaufnahme, dass ein Teil, wie ein Kabel, zwischen einem distalen Ende des seitlichen Führungsarms und der Basis in die Kabelaufnahme eingeführt werden kann, ohne dass die Klammer abgenommen werden muss. Vorzugsweise können außerdem zum Beispiel Kabel getrennt voneinander verlegt werden.

Insbesondere ist wenigstens eine Mehrzahl von Klammern umfasst. Vorzugsweise sind die Klammern im am Zweirad angebrachten Zustand des Radschützers in Längsrichtung der Basis des Radschützers voneinander beabstandet. Vorteilhaft kann dadurch ein Teil wie ein Kabel sicher entlang des Radschützers verlegt und angebracht werden.

Vorzugsweise ist die wenigstens eine Klammer, und insbesondere alle Klammern, als Kunststoffteil, insbesondere Kunststoff-Spritzgussteil, ausgebildet. Bevorzugt ist die wenigstens eine Klammerhalterung, bevorzugt alle Klammerhalterungen, als Kunststoffteil ausgebildet. Insbesondere ist der Radschützer mit den Klammerhalterungen ein Kunststoffteil, vorzugsweise ein Kunststoff-Extrusionsteil. Vorteilhaft sind Kunststoffteile besonders kostengünstig in der Herstellung. Darüber hinaus sind Kunststoffteile vorzugsweise besonders langlebig. Insbesondere kann der flexibel formbare Bereich und/oder die Sicherungseinheit besonders kostengünstig mit ausreichenden Fertigungstoleranzen als Kunststoffteil realisiert werden.

Die erfindungsgemäße Radschutzvorrichtung umfasst wenigstens eine zuvor beschriebene Fahrzeugkomponente. Die Radschutzvorrichtung kann weitere Komponenten umfassen, wie weitere Fahrzeugkomponenten oder auch Teile, wie Kabel, einer Leuchte oder Streben oder dergleichen.

Das erfindungsgemäße Fahrzeug mit wenigstens einem Rad, insbesondere Zweirad, umfasst eine zuvor beschriebene Radschutzvorrichtung.

Auch die erfindungsgemäße Radschutzvorrichtung und das erfindungsgemäße Fahrzeug haben viele Vorteile, wie den sicheren Halt der Befestigungseinrichtung. Weitere Vorteile und Weiterbildungen ergeben sich aus der gesamten allgemeinen Beschreibung und den Ausführungsbeispielen.

Eine andere Fahrzeugkomponente wenigstens für ein Fahrzeug, wie ein Zweirad, umfasst wenigstens eine Befestigungseinrichtung wenigstens zur Anbringung wenigstens eines Teils, wie eines Kabels oder einer Strebe, an wenigstens einem Anbauteil des Fahrzeugs umfasst:
- wenigstens eine Klammer; und
- wenigstens eine Klammerhalterung; und wobei
- die wenigstens eine Klammer dazu eingerichtet ist lösbar mit der wenigstens einen Klammerhalterung verbunden zu werden.

Insbesondere weist die Klammer wenigstens einen flexibel formbaren Bereich auf, um Fertigungstoleranzen bei Herstellen der Verbindung der Klammer auf die wenigstens eine Klammerhalterung zu kompensieren. Weiterbildungen und Vorteile ergeben sich aus der gesamten allgemeinen Beschreibung und aus der Beschreibung der Ausführungsbeispiele.

Weitere Merkmale und Vorteile von Ausführungsbeispielen der Erfindung werden unter Bezugnahme auf die Zeichnungen nachfolgend beschrieben. Dabei werden für gleiche oder ähnliche Teile und für Teile mit gleichen oder ähnlichen Funktionen dieselben Bezugszeichen verwendet. Es zeigen:
- Fig. 1: eine schematische Schnittansicht einer erfindungsgemäßen Fahrzeugkomponente für ein Fahrzeug;
- Fig. 2: eine schematische Detailansicht der Befestigungseinrichtung der Fahrzeugkomponente;
- Fig. 3: eine schematische perspektivische Ansicht einer Klammer der Fahrzeugkomponente mit einem flexibel formbaren Bereich;
- Fig. 4: eine schematische Frontansicht der Klammer;
- Fig. 5: eine schematische Ansicht der Klammer von unten;
- Fig. 6: eine schematische Ansicht der Klammer von oben;
- Fig. 7: eine schematische Seitenansicht der Klammer;
- Fig. 8: eine schematische Schnittansicht eines weiteren Ausführungsbeispiels einer erfindungsgemäßen Fahrzeugkomponente mit einem Anbringungselement mit einer Strebe und einem Radschützer;
- Fig. 9: eine schematische Seitenansicht der weiteren Ausführungsform der Fahrzeugkomponente mit Strebe und Radschützer;
- Fig. 10: eine Seitenansicht der Klammer der weiteren Ausführungsform;
- Fig. 11: eine Frontansicht der Klammer der weiteren Ausführungsform;
- Fig. 12: eine Ansicht der Klammer der weiteren Ausführungsform von unten;
- Fig. 13: eine Draufsicht auf die Klammer der weiteren Ausführungsform;
- Fig. 14: eine schematische Schnittansicht einer weiteren Ausführungsform einer erfindungsgemäßen Fahrzeugkomponente mit einem Radschützer;
- Fig. 15: eine schematische Ansicht der Klammer der weiteren Ausführungsform von unten;
- Fig. 16: eine schematische Ansicht der Klammer der weiteren Ausführungsform von oben;
- Fig. 17: eine schematische Schnittansicht einer weiteren Ausführungsform einer erfindungsgemäßen Fahrzeugkomponente mit einem Radschützer;
- Fig. 18: eine schematische Ansicht der Klammer der weiteren Ausführungsform von unten; und
- Fig. 19: eine schematische Ansicht der Klammer der weiteren Ausführungsform von oben.

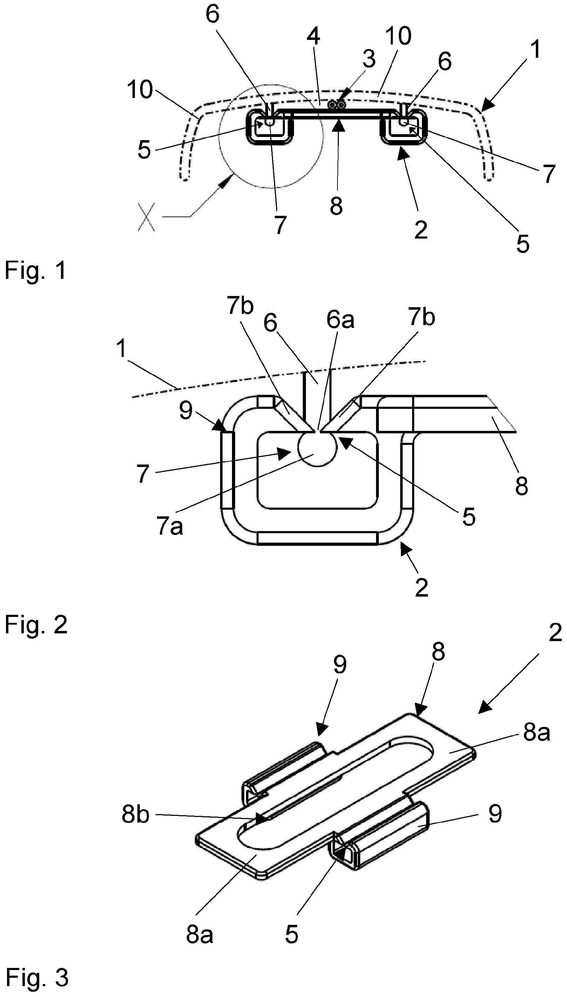

Figur 1 zeigt eine schematische Schnittansicht einer erfindungsgemäßen Fahrzeugkomponente für ein Fahrzeug. Die Fahrzeugkomponente umfasst hier eine Befestigungseinrichtung 5 mit einer Mehrzahl von Klammern 2 und zwei Klammerhalterungen 6, welche sich parallel zueinander erstrecken. Die Klammerhalterungen 6 sind hier an einem als Radschützer 1 ausgebildeten Anbauteil 1 einer Radschutzvorrichtung des Fahrzeugs ausgebildet. Das Fahrzeug ist hier als ein Zweirad und im Detail als ein Fahrrad ausgebildet. Die Klammer 2 ist lösbar mit den Klammerhalterungen 6 verbunden. Eine formschlüssige Verbindung wird durch die Sicherungseinheit 7 hergestellt.

Die Klammerhalterungen 6 bilden hier zusammen mit einer Basis 10 des Radschützers 1 eine Kabelaufnahme 4 für ein Teil 3, hier ein Kabel 3. Das Kabel 3 wird durch die Klammer 2 in der Kabelaufnahme 4 gehalten. Es können seitliche Führungsarme 12 vorhanden sein, welche hier nicht dargestellt sind.

Fig. 2 zeigt eine schematische Detailansicht der Befestigungseinrichtung 5 der Fahrzeugkomponente mit der Sicherungseinheit 7. Die Sicherungseinheit 7 umfasst hier ein Rückhalteelement 7a, welches an einem distalen Ende 6a der Kabelaufnahme 6 angeordnet ist und als Verdickung 7a ausgebildet ist.

Die Klammer 2 umfasst hier zwei Aufnahmen 9. Die Aufnahme 9 ist U-förmig ausgebildet und umschließt den Klammerhalter 6. An den Aufnahmen 9 sind die Rastelemente 7b ausgebildet, welche das Rückhalteelement 7a hintergreifen. Beim Aufstecken der Klammer 2 verformen sich die Rastelemente 7b zunächst elastisch und formen sich nach der Verdickung 7a wieder zurück, sodass die Rastelemente 7b das Rückhalteelement 7a hintergreifen.

Fig. 3 zeigt eine schematische perspektivische Ansicht einer Klammer 2 der Fahrzeugkomponente mit einem flexibel formbaren Bereich 8. Der flexible formbare Bereich 8 ist dauerhaft flexibel formbar ohne Beschädigung. Dadurch können die beiden Aufnahmen 9 so genau zu den Klammerhalterungen 6 positioniert werden, dass eine beastbare formschlüssige Verbindung durch die Sicherungseinheit 7 herstellbar ist. Die Klammer 2 ist hier als Kunststoff-Spritzgussteil und die Klammerhalterungen 6 sowie der Radschützer 1 sind hier als Kunstoff-Extrusionsteile ausgebildet. Diese Kunststoffteile sind besonders kostengünstig fertigbar.

Der flexibel formbare Bereich 8 umfasst hier zwei Verbindungsstege 8a, welche eine Öffnung 8b bilden, die hier als Langloch ausgebildet ist. Dadurch ist ein Formwiderstand gegen Verformung sehr gering und die elastischen Rückstellkräfte, welche durch Verformung des Kunststoffs resultieren sind kleiner als die Haltekräfte der formschlüssigen Verbindung. Die Öffnung 8b kann auch als Anbringungselement 11 genutzt werden. Durch den flexibel formbaren Bereich 8 können auch verschiedene Größen von Radschützern 1, insbesondere verschiedene Radschutz-Zollgrößen, mit einer Klammer 2 bedient werden.

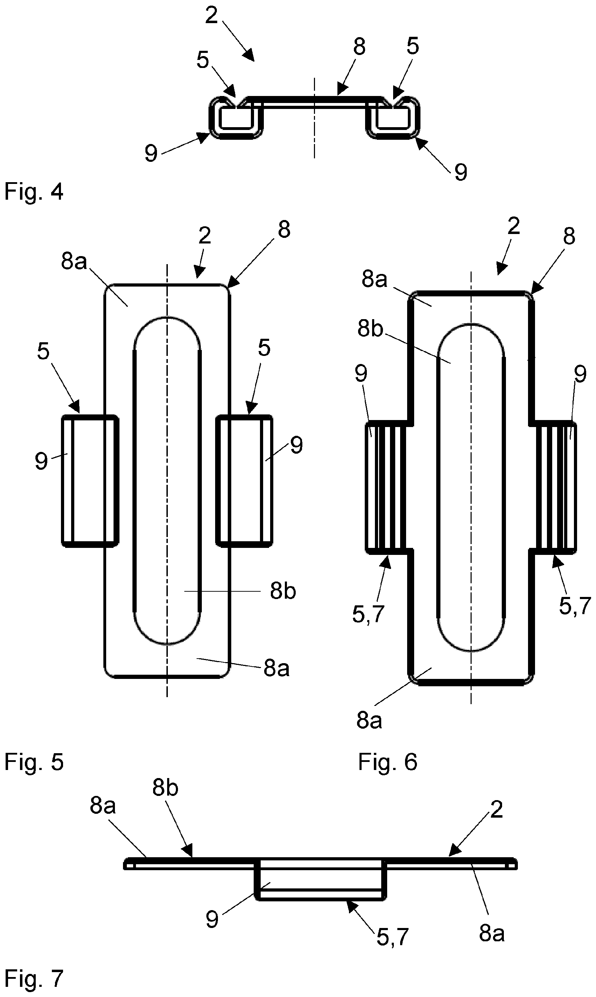

Fig. 4 zeigt eine schematische Frontansicht der Klammer 2. Der flexibel formbare Bereich 8 ist flach ausgebildet.

Fig. 5 zeigt eine schematische Ansicht der Klammer 2 von unten.

Fig. 6 zeigt eine schematische Ansicht der Klammer 2 von oben.

Fig. 7 zeigt eine schematische Seitenansicht der Klammer 2.

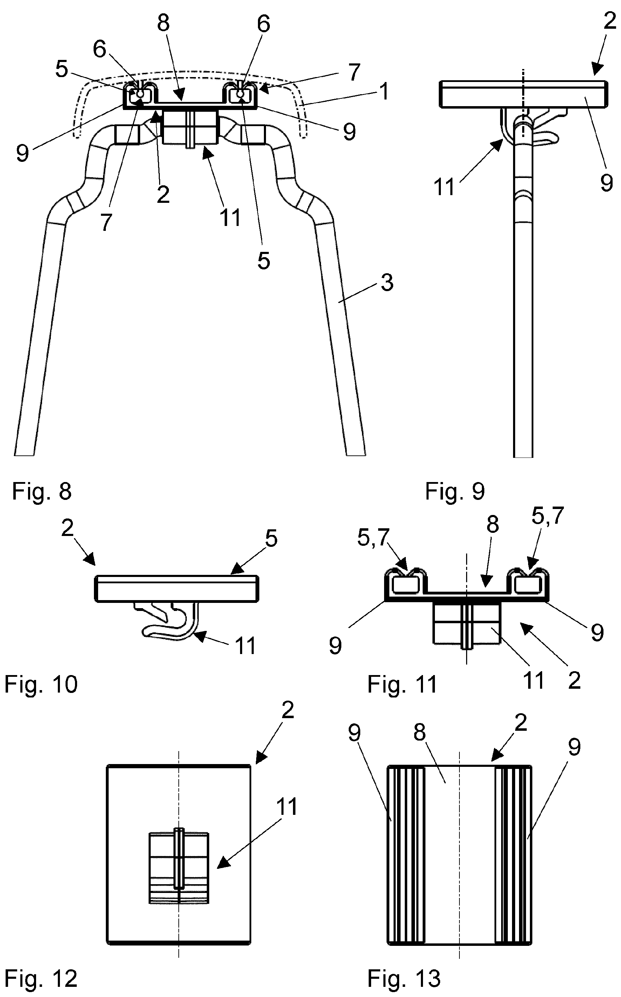

Fig. 8 zeigt eine schematische Schnittansicht einer weiteren Ausführungsform einer erfindungsgemäßen Fahrzeugkomponente mit einem Anbringungselement 11 mit einer Strebe 3 und einem Radschützer 1. Hier ist ein Anbringungselement vorhanden, welches als ein Hakenelement 11 ausgebildet ist. In das Hakenelement 11 ist die Strebe 3 als Teil 3 eingeklipst. Der flexibel formbare Bereich 8 weist hier einen besonders leicht formbaren Kunststoff auf, sodass auch hier eine flexible Verformung ermöglicht wird. Es können ein oder mehrere seitliche Führungsarme 12 vorhanden sein, welche hier nicht dargestellt sind.

Fig. 9 zeigt eine schematische Seitenansicht der weiteren Ausführungsform der Fahrzeugkomponente mit Strebe 3 und Radschützer 1.

Fig. 10 zeigt eine Seitenansicht der Klammer 2 der weiteren Ausführungsform.

Fig. 11 zeigt eine Frontansicht der Klammer 2 der weiteren Ausführungsform.

Fig. 12 zeigt eine Ansicht der Klammer 2 der weiteren Ausführungsform von unten.

Fig. 13 zeigt eine Draufsicht auf die Klammer 2 der weiteren Ausführungsform.

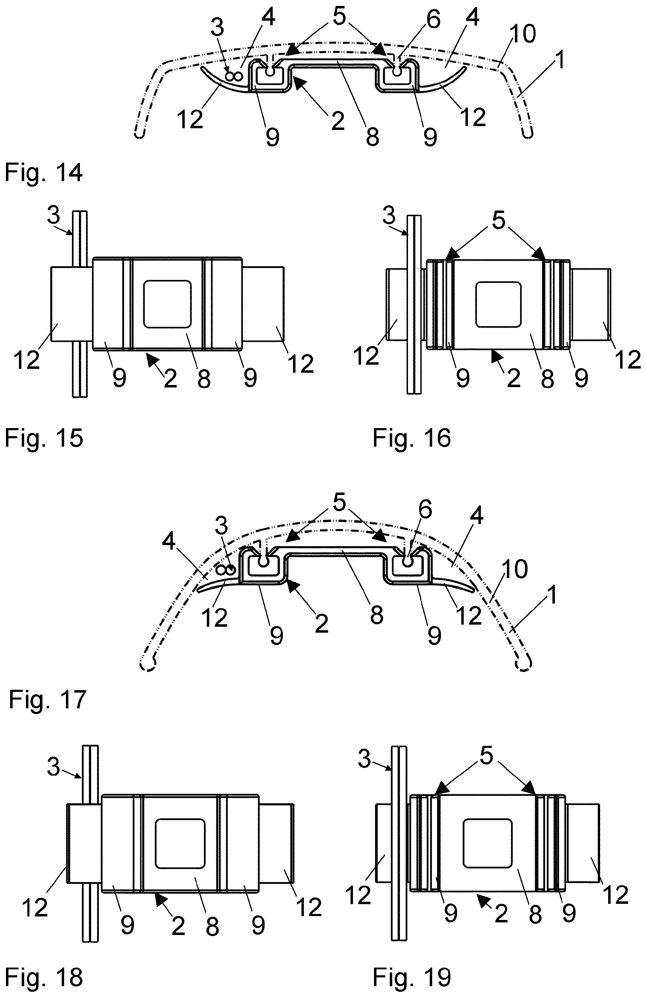

Fig. 14 zeigt eine schematische Schnittansicht einer weiteren Ausführungsform einer erfindungsgemäßen Fahrzeugkomponente mit einem Radschützer 1. Hier weist die Klammer 2 zusätzlich zwei seitliche Führungsarme 12 auf, welche sich von den Aufnahmen 9 weg erstrecken. Die seitlichen Führungsarme 12 bilden hier jeweils mit der Basis 10 des Radschützers 1 eine Kabelaufnahme 4. Hier kann ein Teil 3, wie hier ein Kabel 3, auch im aufgenommenen Zustand der Klammer 2 an der Klammerhalterung 6 zwischen dem seitlichen Führungsarm 12 und der Basis 10 des Radschützers 1 eingebracht werden, indem es zwischen dem distalen Ende des seitlichen Führungsarms 12 und der Basis 10 des Radschützers 1 durchgeführt wird. Hier erstrecken sich die seitlichen Führungsarme 12 in einer Richtung quer zu einem Verlauf der stegförmigen Klammerhalterungen 6. Die seitlichen Führungsarme 12 sind zu den Klammerhaltungen 6 hin gekrümmt ausgebildet, also hier insbesondere nach oben gekrümmt ausgebildet. Auch hier ist die Klammer 2 als Kunststoff-Spritzgussteil ausgebildet.

Fig. 15 zeigt eine schematische Ansicht der Klammer 2 der weiteren Ausführungsform von unten. Hier ist zusätzlich das Kabel 3 aus Fig. 14 mit dargestellt.

Fig. 16 zeigt eine schematische Ansicht der Klammer 2 der weiteren Ausführungsform von oben. Auch hier ist das Kabel 3 aus Fig. 14 mit dargestellt.

Fig. 17 zeigt eine schematische Schnittansicht einer weiteren Ausführungsform einer erfindungsgemäßen Fahrzeugkomponente mit einem Radschützer 1. Hier sind die seitlichen Führungsarme 3 von den Klammerhalterungen 6 weg gekrümmt ausgebildet, also hier insbesondere nach unten gekrümmt ausgebildet. Auch hier ist die Klammer 2 als Kunststoff-Spritzgussteil ausgebildet.

Fig. 18 zeigt eine schematische Ansicht der Klammer 2 der weiteren Ausführungsform von unten. Hier ist zusätzlich das Kabel 3 aus Fig. 17 mit dargestellt.

Fig .19 zeigt eine schematische Ansicht der Klammer 2 der weiteren Ausführungsform von oben. Hier ist zusätzlich das Kabel 3 aus Fig. 17 mit dargestellt.

### Bezugszeichenliste

- 1: Anbauteil, Radschützer
- 2: Klammer
- 3: Teil, Kabel, Strebe
- 4: Kabelaufnahme
- 5: Befestigungseinrichtung
- 6: Klammerhalterung
- 6a: distales Ende der Klammerhalterung
- 7: Sicherungseinheit
- 7a: Rückhalteelement, Verdickung
- 7b: Rastelement
- 8: flexibel formbarer Bereich
- 8a: Verbindungssteg
- 8b: Öffnung
- 9: Aufnahme
- 10: Basis des Radschützers
- 11: Anbringungselement, Hakenelement, Öffnung
- 12: seitlicher Führungsarm

## Patentansprüche

1. Fahrzeugkomponente, insbesondere Fahrzeugkomponente, wenigstens für ein Fahrzeug, wie ein Zweirad, mit wenigstens einer Befestigungseinrichtung (5) wenigstens zur Anbringung wenigstens eines Teils (3), wie eines Kabels (3) oder einer Strebe (3), an wenigstens einem Anbauteil (1) des Fahrzeugs umfassend:
- wenigstens eine Klammer (2); und
- wenigstens eine Klammerhalterung (6); und wobei
- die wenigstens eine Klammer (2) dazu eingerichtet ist lösbar mit der wenigstens einen Klammerhalterung (6) verbunden zu werden; und wobei die Klammer (2) wenigstens eine Aufnahme (9) aufweist, welche die Klammerhalterung (6) im aufgenommenen Zustand wenigstens teilweise umschließt; und
- wenigstens eine Sicherungseinheit (7) zur Herstellung einer formschlüssigen Verbindung zwischen der Klammer (2) und der Klammerhalterung (6); und wobei
- ein seitlicher Führungsarm (12) vorhanden ist.

2. Fahrzeugkomponente nach Anspruch 1, wobei die Sicherungseinheit (7) wenigstens ein hintergreifbares Rückhalteelement (7a) umfasst, welches an einem äußeren distalen Ende (6a) der Klammerhaltung (6) als Verdickung (7a) ausgebildet ist.

3. Fahrzeugkomponente nach einem der vorhergehenden Ansprüche, wobei die Sicherungseinheit (7) wenigstens ein Rastelement (7b) aufweist, welches insbesondere an der Aufnahme (9) der Klammer (2) ausgebildet ist.

4. Fahrzeugkomponente nach einem der vorhergehenden Ansprüche, wobei die Klammerhalterung (6) im Wesentlichen stegförmig ausgebildet ist und wobei die Aufnahme (9) U-förmig ausgebildet ist.

5. Fahrzeugkomponente nach einem der vorhergehenden Ansprüche, wobei die Befestigungseinrichtung (5) wenigstens zwei Klammerhalterungen (6) umfasst, und wobei die Klammer (2) an beiden Klammerhalterungen (6) gleichzeitig aufnehmbar ist, und wobei die Klammerhalterungen (6) sich insbesondere parallel zueinander erstrecken.

6. Fahrzeugkomponente nach dem vorhergehenden Anspruch, wobei die Klammer (2) wenigstens einen flexibel formbaren Bereich (8) aufweist, und wobei der flexibel formbare Bereich (8) im verbundenen Zustand bevorzugt zwischen den Klammerhalterungen (6) angeordnet ist, und wobei der flexibel formbare Bereich (8) besonders bevorzugt durch wenigstens einen Verbindungssteg (8a) gebildet wird, und insbesondere eine Mehrzahl an Verbindungsstegen (8a) umfasst, welche wenigstens eine Öffnung (8b) bilden.

7. Fahrzeugkomponente nach einem der vorhergehenden Ansprüche, wobei die Befestigungseinrichtung (5) wenigstens ein Anbringungselement (11), wie ein Hakenelement (11) zum Anbringen einer Stützstrebe (3) oder dergleichen aufweist.

8. Fahrzeugkomponenten nach einem der vorhergehenden Ansprüche, wobei die Klammerhalterung (6) an wenigstens einem Anbauteil (1) ausgebildet ist; und wobei das Anbauteil (1) bevorzugt als Radschützer (1) für ein Fahrzeug mit wenigstens einem Rad, wie ein Zweirad, ausgebildet ist, und wobei das Anbauteil (1) bevorzugt wenigstens eine Basis (10) aufweist; und wobei besonders bevorzugt wenigstens eine Klammerhalterung (6) an der Basis (10) des Anbauteils (1) ausgebildet ist.

9. Fahrzeugkomponente nach dem vorhergehenden Anspruch, wobei die Basis (10) langgestreckt ist und sich entlang einer Längsrichtung erstreckt, und wobei die Basis (10) des Radschützers (1) insbesondere in ihrer Längsrichtung zumindest abschnittsweise teiltorusförmig ausgebildet ist; und/oder
wobei wenigstens eine Klammerhalterung (6) in Längsrichtung der Basis (10) auf einer einem Rad zugewandten Seite des Radschützers (1) angeordnet ist; und/oder
wobei die Klammerhalterung (6) sich in Längsrichtung der Basis (10) des Radschützers (1) erstreckt, wobei die Klammerhalterung (6) sich insbesondere über mehr als die Hälfte der Länge der Basis (10), vorzugsweise über mehr als drei Viertel der Länge der Basis (10), beispielsweise über die gesamte Länge der Basis (10) des Radschützers (1) erstreckt; und/oder
wobei sich die Klammerhalterung (6) quer von der Basis (10) erstreckt, insbesondere in einem am Zweirad angebrachten Zustand in Richtung des Rads.

10. Fahrzeugkomponente nach einem der beiden vorhergehenden Ansprüche, wobei wenigstens die Basis (10) mit der wenigstens einen Klammerhalterung (6), und insbesondere mit der Klammer (2), eine Kabelaufnahme (4) zur Aufnahme eines Kabels (3), bildet.

11. Fahrzeugkomponente nach einem der vorhergehenden Ansprüche, umfassend eine Mehrzahl von Klammern (2), und wobei die Klammern (2) insbesondere im am Zweirad angebrachten Zustand des Radschützers (1) in Längsrichtung der Basis (10) des Radschützers (1) voneinander beabstandet sind.

12. Fahrzeugkomponente nach einem der vorhergehenden Ansprüche, wobei die wenigstens eine Klammer (2) als Kunststoffteil, insbesondere Kunststoff-Spritzgussteil, ausgebildet ist und/oder wobei die wenigstens eine Klammerhalterung (6), insbesondere der Radschützer (1) als wenigstens ein Kunststoffteil, vorzugsweise ein Kunststoff-Extrusionsteil, ausgebildet ist.

13. Radschutzvorrichtung umfassend wenigstens eine Fahrzeugkomponente nach einem der vorhergehenden Ansprüche.

14. Fahrzeug mit wenigstens einem Rad, insbesondere Zweirad, umfassend eine Radschutzvorrichtung dem vorhergehenden Anspruch.
